(19) Europäisches Patentamt
European Patent Office
Office européen des brevets

(11) EP 3 416 808 B1

(12) **EUROPÄISCHE PATENTSCHRIFT**

(45) Veröffentlichungstag und Bekanntmachung des Hinweises auf die Patenterteilung:
**26.10.2022 Patentblatt 2022/43**

(21) Anmeldenummer: **17704289.2**

(22) Anmeldetag: **16.02.2017**

(51) Internationale Patentklassifikation (IPC):
***B29C 67/00*** *(2017.01)* ***C09B 17/00*** *(2006.01)*
***C09B 21/00*** *(2006.01)*

(52) Gemeinsame Patentklassifikation (CPC):
(C-Sets verfügbar)
**B29C 64/153; B33Y 70/00; C08K 5/3465; C08K 5/357; C08K 5/46; C09B 67/0097** (Forts.)

(86) Internationale Anmeldenummer:
**PCT/EP2017/053526**

(87) Internationale Veröffentlichungsnummer:
**WO 2017/140795 (24.08.2017 Gazette 2017/34)**

(54) **POLYAMIDZUSAMMENSETZUNG ENTHALTEND EIN POLYAMID UND EIN ADDITIV**

POLYAMIDE COMPOSITION COMPRISING A POLYAMIDE AND AN ADDITIVE

COMPOSITION DE POLYAMIDE COMPRENANT UN POLYAMIDE ET UN ADDITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2016 EP 16156545**

(43) Veröffentlichungstag der Anmeldung:
**26.12.2018 Patentblatt 2018/52**

(73) Patentinhaber: **BASF SE**
**67056 Ludwigshafen (DE)**

(72) Erfinder:
- **GABRIEL, Claus**
  **64347 Griesheim (DE)**
- **GRAMLICH, Simon**
  **69493 Hirschberg (DE)**
- **OSTERMANN, Rainer**
  **45657 Recklinghausen (DE)**
- **RICHTER, Florian**
  **68199 Mannheim (DE)**
- **DABBOUS, Raphael**
  **4125 Riehen (CH)**
- **MEIER, Thomas**
  **68199 Mannheim (DE)**
- **SCHROF, Wolfgang**
  **67271 Neuleiningen (DE)**

(74) Vertreter: **BASF IP Association**
**BASF SE**
**GBI-C006**
**67056 Ludwigshafen (DE)**

(56) Entgegenhaltungen:
**DE-A1- 2 458 347** **US-A- 5 527 877**
**US-A1- 2006 108 567**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08K 5/3465, C08L 77/00;**
**C08K 5/357, C08L 77/00;**
**C08K 5/46, C08L 77/00**

**Beschreibung**

Die vorliegende Erfindung betrifft die Verwendung einer Polyamidzusammensetzung (PZ), die mindestens ein Polyamid (P) und mindestens ein Additiv (A) enthält, als Sinterpulver, wobei die Polyamidzusammensetzung (PZ) als Pulver mit einer Partikelgröße im Bereich von 1 bis 200 $\mu$m vorliegt, gemessen mittels Laserbeugung. Die vorliegende Erfindung betrifft außerdem die Verwendung der Polyamidzusammensetzung (PZ) in einem selektiven Lasersinterverfahren und zur Herstellung von Formkörpern.

In jüngster Zeit ist die schnelle Bereitstellung von Prototypen eine häufig gestellte Aufgabe. Ein Verfahren, das für dieses sogenannte "rapid prototyping" besonders geeignet ist, ist das selektive Lasersintern. Dabei wird ein Kunststoff in einer Kammer selektiv mit einem Laserstrahl belichtet, das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Zum Einsatz in einem selektiven Lasersinterverfahren sind allerdings nicht alle Kunststoffpulver geeignet. Häufig verwendet als Kunststoffpulver werden Polyamide. Einige dieser Polyamide zeigen beim selektiven Lasersintern allerdings einen erhöhten Schwund oder sogar einen Verzug, wodurch eine Verwendung oder Weiterverarbeitung der erhaltenen Bauteile nur erschwert möglich ist.

Es ist außerdem bekannt, Polyamide aufgrund ihrer hohen Chemikalienbeständigkeit sowie aufgrund ihrer guten mechanischen Eigenschaften als pulverförmige Beschichtungsmittel zur Herstellung lackähnlicher Überzüge von Metallen einzusetzen. Die Beschichtung erfolgt hierbei beispielsweise durch Wirbelsinterverfahren, Flammspritzverfahren oder elektrostatische Beschichtungsverfahren.

Hierbei sind Polyamidpulver bevorzugt, die eine enge Korngrößenverteilung, eine runde Form und eine glatte Oberfläche aufweisen. Polyamidpulver, die die vorstehend genannten Eigenschaften erfüllen, sind gut fluidisierbar und daher für Beschichtungsverfahren besonders gut geeignet.

US 2006/0108567 A1 offenbart eine Harzzusammensetzung, die einen Poly(arylenether), ein Polyamid, einen Schlagzähmodifizierer, elektrisch leitendes Füllmaterial und ein Additiv, welches vier oder mehr konjugierte Doppelbindungen und einen Schmelzpunkt < 400 °C aufweist, enthält.

DE 24 58 347 A1 offenbart ein Verfahren zur Herstellung von basischen Oxazinfarbstoffen durch Nitrosierung eines m-Aminophenols in einem aliphatischen Alkohol und anschließender Umsetzung mit m-Aminophenol, m-Aminophenolether, m-Phenylendiamin oder Mono-N-sulfonsäure in einer Kondensationsreaktion.

Es besteht daher Bedarf an der Bereitstellung von Polyamidzusammensetzungen, die sich beispielsweise als Beschichtungsmittel sowie für den Einsatz in einem selektiven Lasersinterverfahren eignen.

Die der vorliegenden Erfindung zugrundeliegende Aufgabe besteht somit darin, eine neue Polyamidzusammensetzung bereitzustellen. Die Polyamidzusammensetzung soll insbesondere geeignet sein zur Herstellung von Formkörpern.

Gelöst wurde diese Aufgabe durch die Verwendung einer Polyamidzusammensetzung (PZ), die mindestens ein Polyamid (P) und mindestens ein Additiv (A) enthält, wobei das mindestens eine Additiv (A) ausgewählt ist aus Verbindungen der allgemeinen Formel (I)

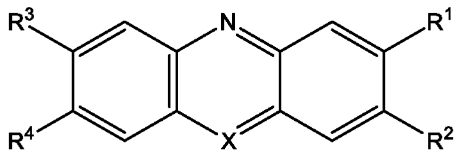

(I)

in der

| | |
|---|---|
| $R^1$ und $R^3$ | unabhängig voneinander ausgewählt sind aus der Gruppe bestehend aus H, $C_1$- bis $C_{10}$-Alkyl und $NR^5R^6$, wobei<br>$R^5$ und $R^6$ unabhängig voneinander ausgewählt sind aus der Gruppe bestehend aus H und $C_1$- bis $C_{10}$-Alkyl; |
| $R^2$ und $R^4$ | unabhängig voneinander ausgewählt sind aus der Gruppe bestehend aus H, $C_1$- bis $C_{10}$-Alkyl und $NR^7R^8$, wobei<br>$R^7$ und $R^8$ unabhängig voneinander ausgewählt sind aus der Gruppe bestehend aus H und $C_1$- bis $C_{10}$-Alkyl; |
| X | N, $O^+$ oder $S^+$ bedeutet; |

wobei die Verbindungen der allgemeinen Formel (I) eine positive Ladung aufweisen, wenn X $O^+$ oder $S^+$ bedeutet und die Verbindungen der allgemeinen Formel (I) dann ein Anion $Y^-$ enthalten,

wobei

$Y^-$ ausgewählt ist aus der Gruppe bestehend aus Hydroxid, Chlorid, Bromid, Iodid, Sulfat, Sulfit, Phosphat und Phosphit, und wobei die Polyamidzusammensetzung (PZ) als Pulver mit einer Partikelgröße im Bereich von 1 bis 200 μm vorliegt, gemessen mittels Laserbeugung, als Sinterpulver

Es wurde überraschend festgestellt, dass eine Polyamidzusammensetzung (PZ), die mindestens ein Polyamid (P) und mindestens ein Additiv (A) enthält, geeignet ist für den Einsatz in einem selektiven Lasersinterverfahren. Die mit der Polyamidzusammensetzung (PZ) hergestellten Formkörper weisen einen deutlich reduzierten oder sogar gar keinen Verzug auf.

Es wurde zudem überraschend festgestellt, dass die erfindungsgemäße Polyamidzusammensetzung (PZ) geeignet ist für den Einsatz im selektiven Lasersinterverfahren, in Spritzgussverfahren und in Extrusionsverfahren. Die dabei hergestellten Formkörper weisen eine verbesserte Farbstabilität auf.

Vorteilhaft ist außerdem, dass die Polyamidzusammensetzung (PZ), wenn sie in einem selektiven Lasersinterverfahren eingesetzt wird, wiederverwendet werden kann. Die bei dem selektiven Lasersintern nicht aufgeschmolzene Polyamidzusammensetzung (PZ) besitzt auch nach mehreren Lasersinterzyklen ähnlich vorteilhafte Sintereigenschaften wie beim ersten Sinterzyklus.

Nachfolgend wird die erfindungsgemäße Polyamidzusammensetzung (PZ) näher erläutert.

*Polyamidzusammensetzung (PZ)*

Erfindungsgemäß enthält die Polyamidzusammensetzung (PZ) mindestens ein Polyamid (P) und mindestens ein Additiv (A).

Unter "mindestens ein Polyamid (P)" wird im Rahmen der vorliegenden Erfindung sowohl genau ein Polyamid (P) verstanden, als auch eine Mischung aus zwei oder mehreren Polyamiden (P).

Entsprechendes gilt für "mindestens ein Additiv (A)". "mindestens ein Additiv (A)" bedeutet im Rahmen der vorliegenden Erfindung sowohl genau ein Additiv (A), als auch eine Mischung aus zwei oder mehreren Additiven (A).

Die Polyamidzusammensetzung (PZ) kann das mindestens eine Polyamid (P) und das mindestens eine Additiv (A) in beliebigen Mengen enthalten. Bevorzugt enthält die Polyamidzusammensetzung (PZ) im Bereich von 95 bis 99,9 Gew.-% des mindestens einen Polyamids (P) und im Bereich von 0,1 bis 5 Gew.-% des mindestens einen Additivs (A), bezogen auf die Summe der Gewichtsprozente des mindestens Polyamids (P) und mindestens einen Additivs (A), bevorzugt bezogen auf das Gesamtgewicht der Polyamidzusammensetzung (PZ).

Besonders bevorzugt enthält die Polyamidzusammensetzung (PZ) im Bereich von 97,5 bis 99,5 Gew.-% des mindestens einen Polyamids (P) und im Bereich von 0,5 bis 2,5 Gew.-% des mindestens einen Additivs (A), jeweils bezogen auf die Summe der Gewichtsprozente des mindestens einen Polyamids (P) und des mindestens einen Additivs (A), bevorzugt bezogen auf das Gesamtgewicht der Polyamidzusammensetzung (PZ).

Am meisten bevorzugt enthält die Polyamidzusammensetzung (PZ) im Bereich von 99 bis 99,5 Gew.-% des mindestens einen Polyamids (P) und im Bereich von 0,5 bis 1 Gew.-% des mindestens einen Additivs (A), jeweils bezogen auf die Summe der Gewichtsprozente des mindestens einen Polyamids (P) und des mindestens einen Additivs (A), bevorzugt bezogen auf das Gesamtgewicht der Polyamidzusammensetzung (PZ).

Gegenstand der vorliegenden Erfindung ist somit auch die Verwendung einer Polyamidzusammensetzung (PZ), bei der die Polyamidzusammensetzung (PZ) im Bereich von 95 bis 99,9 Gew.-% des mindestens einen Polyamids (P) und im Bereich von 0,1 bis 5 Gew.-% des mindestens einen Additivs (A) enthält, jeweils bezogen auf die Summe der Gewichtsprozente des mindestens einen Polyamids (P) und des mindestens einen Additivs (A).

Die Polyamidzusammensetzung (PZ) liegt als Pulver mit einer Partikelgröße im Bereich von 1 bis 200 μm vor, bevorzugt im Bereich von 10 bis 150 μm und am meisten bevorzugt im Bereich von 20 bis 120 μm.

Vorzugsweise weist die Polyamidzusammensetzung (PZ)

einen D10-Wert im Bereich von 10 bis 30 μm
einen D50-Wert im Bereich von 25 bis 70 μm und
einen D90-Wert im Bereich von 50 bis 150 μm
auf.

Besonders bevorzugt weist die Polyamidzusammensetzung (PZ) einen

einen D10-Wert im Bereich von 10 bis 30 μm
einen D50-Wert im Bereich von 40 bis 60 μm und
einen D90-Wert im Bereich von 80 bis 100 μm

auf.

Unter "D10-Wert" wird im Rahmen der vorliegenden Erfindung in diesem Zusammenhang die Partikelgröße verstanden, bei der 10 vol.-% der Partikel, bezogen auf das Gesamtvolumen der Partikel kleiner oder gleich dem D10-Wert sind und 90 vol.-% der Partikel, bezogen auf das Gesamtvolumen der Partikel größer als der D10-Wert sind. In Analogie dazu wird unter dem "D50-Wert" die Partikelgröße verstanden, bei der 50 vol.-% der Partikel, bezogen auf das Gesamtvolumen der Partikel kleiner oder gleich dem D50-Wert sind und 50 vol.-% der Partikel, bezogen auf das Gesamtvolumen der Partikel größer als der D50-Wert sind. In Analogie dazu wird unter dem "D90-Wert" die Partikelgröße verstanden, bei der 90 vol.-% der Partikel, bezogen auf das Gesamtvolumen der Partikel, kleiner oder gleich dem D90-Wert sind und 10 vol.-% der Partikel, bezogen auf das Gesamtvolumen der Partikel größer als der D90-Wert sind.

Zur Ermittlung der Partikelgrößen wird die Polyamidzusammensetzung (PZ) trocken mittels Druckluft oder in einem Lösungsmittel, wie beispielsweise Wasser oder Ethanol, suspendiert und die Suspension vermessen. Die Bestimmung des D10-, D50- und D90-Wertes erfolgt mittels Laserbeugung unter Verwendung eines Mastersizers 2000 der Firma Malvern, die Auswertung erfolgt mittels Mie-Theorie und Fraunhofer-Näherung.

Die Polyamidzusammensetzung (PZ) kann außer dem mindestens einen Polyamid (P) und dem mindestens einen Additiv (A) weitere Additive (wA) enthalten.

Die Polyamidzusammensetzung (PZ) kann beispielsweise im Bereich von 0,1 bis 60 Gew.-% weitere Additive (wA) enthalten, bezogen auf das Gesamtgewicht der Polyamidzusammensetzung (PZ). Bevorzugt enthält die Polyamidzusammensetzung (PZ) im Bereich von 0,25 bis 40 Gew.-% weitere Additive (wA), insbesondere bevorzugt im Bereich von 0,3 bis 30 Gew.-%, jeweils bezogen auf das Gesamtgewicht der Polyamidzusammensetzung (PZ).

Gegenstand der vorliegenden Erfindung ist somit auch die Verwendung einer Polyamidzusammensetzung (PZ), bei der die Polyamidzusammensetzung (PZ) im Bereich von 0,1 bis 60 Gew.-% weitere Additive (wA) enthält, bezogen auf das Gesamtgewicht der Polyamidzusammensetzung (PZ).

Es versteht sich von selbst, dass, wenn die Polyamidzusammensetzung (PZ) weitere Additive (wA) enthält, sich die Gew.-% des in der Polyamidzusammensetzung (PZ) enthaltenen mindestens einen Polyamids (P) entsprechend reduzieren, sodass sich die Summe der Gew.-% des mindestens einen Polyamids (P), des mindestens einen Additivs (A) sowie der weiteren Additive (wA) zu 100 % addieren.

Enthält die Polyamidzusammensetzung (PZ) weitere Additive (wA), so enthält die Polyamidzusammensetzung beispielsweise im Bereich von 35 bis 99,8 Gew.-% des mindestens einen Polyamids (P), im Bereich von 0,1 bis 5 Gew.-% des mindestens einen Additivs (A) und im Bereich von 0,1 bis 60 Gew.-% der weiteren Additive (wA), jeweils bezogen auf die Summe der Gewichtsprozenten des mindestens einen Polyamids (P), des mindestens einen Additivs (A) und der weiteren Additive (wA), bevorzugt bezogen auf das Gesamtgewicht der Polyamidzusammensetzung (PZ).

Bevorzugt enthält die Polyamidzusammensetzung (PZ) im Bereich von 57,5 bis 99,0 Gew.-% des mindestens einen Polyamids (P), im Bereich von 0,5 bis 2,5 Gew.-% des mindestens einen Additivs (A) und im Bereich von 0,25 bis 40 Gew.-% der weiteren Additive (wA), jeweils bezogen auf die Summe der Gewichtsprozenten des mindestens einen Polyamids (P), des mindestens einen Additivs (A) und der weiteren Additive (wA), bevorzugt bezogen auf das Gesamtgewicht der Polyamidzusammensetzung (PZ).

Am meisten bevorzugt enthält die Polyamidzusammensetzung (PZ) im Bereich von 69 bis 99,2 Gew.-% des mindestens einen Polyamids (P), im Bereich von 0,5 bis 1 Gew.-% des mindestens einen Additivs (A) und im Bereich von 0,3 bis 30 Gew.-% der weiteren Additive (wA), jeweils bezogen auf die Summe der Gewichtsprozenten des mindestens einen Polyamids (P), des mindestens einen Additivs (A) und der weiteren Additive (wA), bevorzugt bezogen auf das Gesamtgewicht der Polyamidzusammensetzung (PZ).

Üblicherweise addieren sich also die Gew.-% des in der Polyamidzusammensetzung (PZ) enthaltenen mindestens einen Polyamids (P), des mindestens einen Additivs (A) sowie der gegebenenfalls enthaltenen weiteren Additive (wA) zu 100 %.

Geeignete weitere Additive (wA) sind dem Fachmann als solche bekannt. Vorzugsweise sind die weiteren Additive (wA) ausgewählt aus der Gruppe bestehend aus Stabilisatoren, Farbstoffen, Pigmenten, Füllstoffen, Verstärkungsstoffen, Schlagzähmodifizierern und Weichmachern.

Gegenstand der vorliegenden Erfindung ist somit auch die Verwendung einer Polyamidzusammensetzung (PZ), die weitere Additive (wA) enthält, wobei die weiteren Additive (wA) ausgewählt sind aus der Gruppe bestehend aus Stabilisatoren, Farbstoffen, Pigmenten, Füllstoffen, Verstärkungsstoffen, Schlägzähmodifizierern und Weichmachern.

Geeignete Stabilisatoren sind beispielsweise Phenol, Talcum, Erdalkalisilicate, sterisch gehinderte Phenole, Phosphite und Erdalkaliglycerophosphate.

Geeignete Farbstoffe und Pigmente sind beispielsweise Übergangsmetalloxide oder Nigrosine.

Geeignete Füllstoffe sind beispielsweise Glaskugeln, Glasfasern, Kaolin, Wollastonit, Muscovit, Phlogopit, Kohlefasern, Carbon-Nanotubes und Kreide.

Geeignete Schlagzähmodifizierer sind beispielsweise Polymere auf Basis von Ethylen-Propylen (EPM)- oder

Ethylen-Propylen-Dien (EPDM)-Kautschuken oder thermoplastischen Urethanen, sowie Ionomere oder Styrol-basierte Kautschuke.

*Polyamid (P)*

Geeignete Polyamide (P) weisen im Allgemeinen eine Viskositätszahl von 70 bis 350 ml/g, vorzugsweise von 70 bis 240 ml/g auf. Die Bestimmung der Viskositätszahl erfolgt erfindungsgemäß aus einer 0,5-gew.-%igen Lösung des Polyamids (P) in 96-gew.-%iger Schwefelsäure bei 25 °C gemäß ISO 307.

Als Polyamide (P) sind teilkristalline Polyamide bevorzugt. Geeignete Polyamide (P) weisen ein gewichtsmittleres Molekulargewicht ($M_w$) im Bereich von 500 bis 2 000 000 g/mol, bevorzugt im Bereich von 5 000 bis 500 000 g/mol und besonders bevorzugt im Bereich von 10 000 bis 100 000 g/mol, auf. Das gewichtsmittlere Molekulargewicht ($M_w$) wird bestimmt gemäß ASTM D4001.

Als Polyamide (P) sind beispielsweise Polyamide (P) geeignet, die sich von Lactamen mit 7 bis 13 Ringgliedern ableiten. Als Polyamide (P) sind weiterhin Polyamide (P) geeignet, die durch Umsetzung von Dicarbonsäuren mit Diaminen erhalten werden.

Als Polyamide (P), die sich von Lactamen ableiten, seien beispielhaft Polyamide erwähnt, die sich von Polycaprolactam, Polycapryllactam und/oder Polylaurinlactam ableiten.

Weiterhin geeignete Polyamide (P) sind erhältlich aus ω-Aminoalkylnitrilen. Bevorzugtes ω-Aminoalkylnitril ist Aminocapronitril, das zu Polyamid 6 führt. Weiterhin können Dinitrile mit Diamin umgesetzt werden. Hierbei sind Adipodinitril und Hexamethylendiamin bevorzugt, deren Polymerisation zu Polyamid 66 führt. Die Polymerisation von Nitrilen erfolgt in Gegenwart von Wasser und wird auch als Direktpolymerisation bezeichnet.

Für den Fall, dass Polyamide (P) eingesetzt werden, die aus Dicarbonsäuren und Diaminen erhältlich sind, können Dicarbonsäurealkane (aliphatische Dicarbonsäuren) mit 6 bis 36 Kohlenstoffatomen, bevorzugt 6 bis 12 Kohlenstoffatomen, und besonders bevorzugt 6 bis 10 Kohlenstoffatomen eingesetzt werden. Darüber hinaus sind aromatische Dicarbonsäuren geeignet.

Beispielhaft seien hier Adipinsäure, Azelainsäure, Sebacinsäure, Dodecandisäure sowie Terephthalsäure und/oder Isophtalsäure als Dicarbonsäuren genannt.

Als Diamine eigenen sich beispielsweise Alkandiamine mit 4 bis 36 Kohlenstoffatomen, bevorzugt Alkandiamine mit 6 bis 12 Kohlenstoffatomen, insbesondere Alkandiamine mit 6 bis 8 Kohlenstoffatomen sowie aromatische Diamine, wie beispielsweise m-Xylylendiamin, Di-(4-aminophenyl)methan, Di-(4-aminocyclohexyl)-methan, 2,2-Di-(4-aminophenyl)-propan und 2,2-Di-(4-aminocyclohexyl)-propan sowie 1,5-Diamino-2-methyl-pentan.

Bevorzugte Polyamide (P) sind Polyhexamethylenadipinsäureamid, Polyhexamethylensebacinsäureamid und Polycaprolactam sowie Copolyamid 6/66, insbesondere mit einem Anteil von 5 bis 95 Gew.-% an Caprolactam-Einheiten.

Weiterhin sind Polyamide (P) geeignet, die durch Copolymerisation zweier oder mehrerer der vorstehend und nachstehend genannten Monomeren erhältlich sind, oder Mischungen mehrerer Polyamide (P), wobei das Mischungsverhältnis beliebig ist. Als Mischungen besonders bevorzugt sind Mischungen von Polyamid 66 mit anderen Polyamiden (P), insbesondere Copolyamid 6/66.

Geeignete Polyamide (P) sind somit aliphatische, teilaromatische oder aromatische Polyamide (P). Der Begriff "aliphatische Polyamide" bedeutet, dass die Polyamide (P) ausschließlich aus aliphatischen Monomeren aufgebaut sind. Der Begriff "teilaromatische Polyamide" bedeutet, dass die Polyamide (P) sowohl aus aliphatischen als auch aus aromatischen Monomeren aufgebaut sind. Der Begriff "aromatische Polyamide" bedeutet, dass die Polyamide (P) ausschließlich aus aromatischen Monomeren aufgebaut sind.

Die nachfolgende nicht abschließende Aufstellung enthält die vorstehend genannten sowie weitere Polyamide (P), die für den Einsatz im erfindungsgemäßen Verfahren geeignet sind, sowie die enthaltenen Monomere.

AB-Polymere:

| | |
|---|---|
| PA 4 | Pyrrolidon |
| PA 6 | ε-Caprolactam |
| PA 7 | Enantholactam |
| PA 8 | Capryllactam |
| PA 9 | 9-Aminopelargonsäure |
| PA 11 | 11-Aminoundecansäure |
| PA 12 | Laurinlactam |

AA/BB-Polymere:

| | |
|---|---|
| PA 46 | Tetramethylendiamin, Adipinsäure |
| PA 66 | Hexamethylendiamin, Adipinsäure |
| PA 69 | Hexamethlyendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | Nonyldiamin, Terephthalsäure |
| PA MXD6 | m-Xylyendiamin, Adipinsäure |

| | |
|---|---|
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T und Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Gegenstand der vorliegenden Erfindung ist somit auch die Verwendung einer Polyamidzusammensetzung (PZ), bei der das mindestens eine Polyamid (P) ausgewählt ist aus der Gruppe bestehend aus PA 4, PA 6, PA 7, PA 8, PA 9, PA 11, PA 12, PA 46, PA 66, PA 69, PA 510, PA 610, PA 612, PA 613, PA 1212, PA1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T und Copolyamiden aus zwei oder mehreren der vorstehend genannten Polyamide.

Bevorzugt ist das mindestens eine Polyamid (P) ausgewählt aus der Gruppe bestehend aus Polyamid 6 (PA 6), Polyamid 66 (PA 66), Polyamid 6/66 (PA 6/66), Polyamid 66/6 (PA 66/6), Polyamid 610 (PA 610), Polyamid 6/6T (PA6/6T), Polyamid 12 (PA12) und Polyamid 1212 (PA1212).

Als Polyamid (P) besonders bevorzugt sind Polyamid 6 (PA 6) und/oder Polyamid 66 (PA 66), wobei Polyamid 6 (PA 6) insbesondere bevorzugt ist.

Gegenstand der vorliegenden Erfindung ist somit auch die Verwendung einer Polyamidzusammensetzung (PZ), bei der das mindestens eine Polyamid (P) ausgewählt ist aus der Gruppe bestehend aus Polyamid 6 (PA 6), Polyamid 66 (PA 66), Polyamid 6/66 (PA 6/66), Polyamid 66/6 (PA 66/6), Polyamid 610 (PA 610), Polyamid 6/6T (PA 6/6T), Polyamid 12 (PA12) und Polyamid 1212 (PA1212).

*Additiv (A)*

Erfindungsgemäß ist das mindestens eine Additiv (A) ausgewählt aus Verbindungen der allgemeinen Formel (I), in der

$R^1$ und $R^3$ unabhängig voneinander ausgewählt sind aus der Gruppe bestehend aus H, $C_1$- bis $C_{10}$-Alkyl und $NR^5R^6$, wobei
$R^5$ und $R^6$ unabhängig voneinander ausgewählt sind aus der Gruppe bestehend aus H und $C_1$- bis $C_{10}$-Alkyl;

$R^2$ und $R^4$ unabhängig voneinander ausgewählt sind aus der Gruppe bestehend aus H, $C_1$- bis $C_{10}$-Alkyl und $NR^7R^8$, wobei
$R^7$ und $R^8$ unabhängig voneinander ausgewählt sind aus der Gruppe bestehend aus H und $C_1$- bis $C_{10}$-Al-

kyl;

X N, $O^+$ oder $S^+$ bedeutet;

wobei die Verbindungen der allgemeinen Formel (I) eine positive Ladung aufweisen, wenn X $O^+$ oder $S^+$ bedeutet und die Verbindungen der allgemeinen Formel (I) dann ein Anion $Y^-$ enthalten,
wobei

$Y^-$ ausgewählt ist aus der Gruppe bestehend aus Hydroxid, Chlorid, Bromid, Iodid, Sulfat, Sulfit, Phosphat und Phosphit.

Dem Fachmann ist klar, dass, wenn die Verbindungen der allgemeinen Formel (I) eine positive Ladung aufweisen, das in der Formel (I) enthaltene Anion $Y^-$ im Allgemeinen die positive Ladung ausgleicht. Dies bedeutet beispielsweise, wenn die Verbindung der allgemeinen Formel (I) eine positive Ladung aufweist und das Anion $Y^-$ Chlorid ist, sich die positive Ladung der allgemeinen Formel (I) und die negative Ladung des Anions $Y^-$gegenseitig ausgleichen. Wenn die Verbindung der allgemeinen Formel (I) eine positive Ladung aufweist und das Anion $Y^-$ beispielsweise Phosphat ist, so trägt das Anion eine dreifach negative Ladung. Eine der Ladungen gleicht die positive Ladung der Verbindung der allgemeinen Formel (I) aus, die übrigen beiden negativen Ladungen gleichen die positiven Ladungen von weiteren Verbindungen der allgemeinen Formal (I) aus. Dies ist dem Fachmann bekannt.

Bevorzugt haben die Substituenten der Verbindungen der allgemeinen Formel (I) die folgende Bedeutung:

$R^1$ und $R^3$ unabhängig voneinander ausgewählt sind aus der Gruppe bestehend aus H und $C_1$- bis $C_5$-Alkyl;

$R^2$ und $R^4$ unabhängig voneinander ausgewählt sind aus der Gruppe bestehend aus $C_1$- bis $C_5$-Alkyl und $NR^7R^8$, wobei
$R^7$ und $R^8$ unabhängig voneinander ausgewählt sind aus der Gruppe bestehend aus H und $C_1$- bis $C_5$-Alkyl;

X N oder $S^+$ bedeutet;

wobei die Verbindungen der allgemeinen Formel (I) eine positive Ladung aufweisen, wenn X $S^+$ bedeutet und die Verbindungen der allgemeinen Formel (I) dann ein Anion $Y^-$ enthalten,
wobei

$Y^-$ ausgewählt ist aus der Gruppe bestehend aus Hydroxid, Chlorid, Bromid, Iodid.

Gegenstand der vorliegenden Erfindung ist daher auch die Verwendung einer Polyamidzusammensetzung (PZ), in der die Substituenten der Verbindungen der allgemeinen Formel (I) die folgende Bedeutung haben:

$R^1$ und $R^3$ sind unabhängig voneinander ausgewählt aus der Gruppe bestehend aus H und $C_1$- bis $C_5$-Alkyl;

$R^2$ und $R^4$ sind unabhängig voneinander ausgewählt aus der Gruppe bestehend aus $C_1$- bis $C_5$-Alkyl und $NR^7R^8$, wobei
$R^7$ und $R^8$ unabhängig voneinander ausgewählt sind aus der Gruppe bestehend aus H und $C_1$- bis $C_5$-Alkyl;

X ist N oder $S^+$,

wobei die Verbindungen der allgemeinen Formel (I) eine positive Ladung aufweisen, wenn X $S^+$ bedeutet und die Verbindungen der allgemeinen Formel (I) dann ein Anion $Y^-$ enthalten,
wobei

$Y^-$ ausgewählt ist aus der Gruppe bestehend aus Hydroxid, Chlorid, Bromid und Iodid.

Im Rahmen der vorliegenden Erfindung wird unter Hydroxid $OH^-$, unter Chlorid $Cl^-$, unter Bromid $Br^-$, unter Iodid $I^-$, unter Sulfat $SO_4^{2-}$, unter Sulfit $SO_3^{2-}$, unter Phosphat $PO_4^{3-}$ und unter Phosphit $PO_3^{3-}$ verstanden.

$C_1$- bis $C_{10}$-Alkyl bezeichnet gesättigte und ungesättigte, bevorzugt gesättigte Kohlenwasserstoffe mit einer freien Valenz (Radikal) und von 1 bis 10 Kohlenstoffatomen. Die Kohlenwasserstoffe können linear oder zyklisch sein, bevorzugt sind sie linear. Ebenso ist es möglich, dass sie eine zyklische und eine lineare Komponente enthalten. Beispiele für derartige Alkylgruppen sind Methyl, Ethyl, N-Propyl, N-Butyl, Hexyl und Cyclohexyl. Entsprechende Ausführungen gelten auch für $C_1$- bis $C_5$-Alkyl.

Besonders bevorzugt ist das mindestens eine Additiv (A) ausgewählt aus der Gruppe bestehend aus Verbindungen der Formel (II) und der Formel (III).

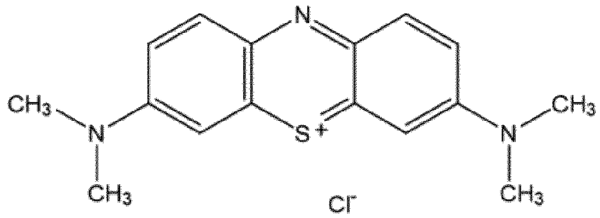

(II)

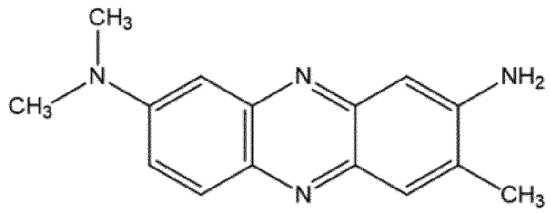

(III)

Bei der Verbindung der Formel (II) handelt es sich um einen Farbstoff, der auch als Methylenblau bezeichnet wird. Andere Namen sind N,N,N',N'-Tetramethylenthioninchlorid bzw. Basic Blue 9 (Color Index 52015; CAS-Nummer 61-73-4 bzw. 122965-43-9 (Hydrat)).

Bei der Verbindung der Formel (III) handelt es sich um einen Farbstoff, der auch als Neutralrot bezeichnet wird. Neutralrot ist auch unter dem Namen 3-Amino-7-Dimethylamino-2-Methylphenazin Hydrochlorid bzw. Toluylenrot (Color Index 50040; CAS-Nummer 553-24-2) bekannt.

Besonders bevorzugt ist das mindestens eine Additiv also ausgewählt aus der Gruppe bestehend aus Neutralrot und Methylenblau.

Gegenstand der vorliegenden Erfindung ist daher auch die Verwendung einer Polyamidzusammensetzung (PZ), in der das enthaltene mindestens eine Additiv (A) ausgewählt ist aus der Gruppe bestehend aus Neutralrot und Methylenblau.

*Herstellung der Polyamidzusammensetzung (PZ)*

Die Polyamidzusammensetzung (PZ) kann nach allen dem Fachmann bekannten Methoden hergestellt werden.

Bevorzugt wird sie hergestellt durch Compoundierung oder durch Fällung.

Verfahren zur Compoundierung und zur Fällung sind dem Fachmann bekannt.

Beispielsweise können das mindestens eine Polyamid (P), das mindestens eine Additiv (A) sowie gegebenenfalls die weiteren Additive (wA) in einem Extruder compoundiert und anschließend aus diesem extrudiert werden, gegebenenfalls mit daran anschließender Stranggranulierung.

Nach der Compoundierung können das mindestens eine Polyamid (P), das mindestens eine Additiv (A) sowie gegebenenfalls die weiteren Additive (wA) gemahlen werden, um die Polyamidzusammensetzung (PZ) in Form eines Pulvers zu erhalten. Verfahren zum Vermahlen der Polyamidzusammensetzung (PZ) sind dem Fachmann als solche bekannt. Beispielsweise kann die Polyamidzusammensetzung (PZ) in eine Mühle gegeben werden und darin vermahlen werden.

Als Mühle eignen sich alle dem Fachmann bekannten Mühlen, beispielsweise Sichtermühlen, Gegenstrahlmühlen, Hammermühlen, Kugelmühlen, Schwingmühlen und Rotormühlen.

Das Mahlen in der Mühle kann ebenfalls nach allen dem Fachmann bekannten Methoden erfolgen, beispielsweise kann die Mahlung unter Inertgas stattfinden und/oder unter Kühlung mit flüssigem Stickstoff. Die Kühlung unter flüssigem Stickstoff ist bevorzugt.

Die Temperatur bei der Mahlung ist beliebig. Bevorzugt wird die Mahlung bei Temperaturen von flüssigem Stickstoff durchgeführt, beispielsweise bei einer Temperatur im Bereich von -210°C bis -195°C.

Wird die Polyamidzusammensetzung (PZ) durch Fällung hergestellt, so wird üblicherweise das mindestens eine Polyamid (P) mit einem Lösungsmittel (LM) gemischt und das mindestens eine Polyamid (P) gegebenenfalls unter Erwärmen in dem Lösungsmittel (LM) gelöst unter Erhalt einer Polyamidlösung (PL). Das Polyamid (P) kann teilweise oder vollständig in dem Lösungsmittel (LM) gelöst werden. Bevorzugt wird das Polyamid (P) vollständig in dem Lösungsmittel (LM) gelöst. Bevorzugt wird also eine Polyamidlösung (PL) erhalten, die das mindestens eine Polyamid (P) vollständig gelöst in dem Lösungsmittel (LM) enthält. Das mindestens eine Additiv (A) sowie gegebenenfalls die weiteren Additive (wA) werden zu der Mischung aus dem mindestens einen Polyamid (P) und dem Lösungsmittel (LM) gegeben.

Der Zeitpunkt der Zugabe des mindestens einen Additivs (A) sowie gegebenenfalls der weiteren Additive (wA) ist dabei unerheblich. Die Zugabe erfolgt aber im Allgemeinen vor der Fällung der Polyamidzusammensetzung (PZ). Das mindestens eine Additiv (A) sowie gegebenenfalls die weiteren Additive (wA) kann zu dem Lösungsmittel (LM) gegeben werden bevor das mindestens eine Polyamid (P) mit dem Lösungsmittel (LM) vermischt wird. Ebenso ist es möglich, das mindestens eine Additiv (A) sowie gegebenenfalls die weiteren Additive (wA) zu der Mischung aus dem mindestens einen Polyamid (P) und dem Lösungsmittel (LM) zu geben bevor das mindestens eine Polyamid (P) in dem Lösungsmittel (LM) gelöst wird. Ebenso ist es möglich, das mindestens eine Additiv (A) sowie gegebenenfalls die weiteren Additive (wA) zu der Polyamidlösung (PL) zu geben.

Die Polyamidlösung (PL) enthält das mindestens eine Additiv (A) üblicherweise gelöst. Das mindestens eine Additiv (A) kann vollständig gelöst in der Polyamidlösung (PL) vorliegen, ebenso ist es möglich, dass das mindestens eine Additiv A) teilweise gelöst in der Polyamidlösung (PL) vorliegt. Bevorzugt liegt das mindestens eine Additiv (A) vollständig gelöst in der Polyamidlösung (PL) vor.

Die weiteren Additive (wA) können teilweise oder vollständig gelöst in der Polyamidlösung (PL) vorliegen. Ebenso ist es möglich, dass sie suspendiert in der Polyamidlösung (PL) vorliegen. Liegen die weiteren Additive (wA) suspendiert in der Polyamidlösung (PL) vor, so bildet die Polyamidlösung (PL), das Dispersionsmittel (kontinuierliche Phase) und die weiteren Additive (wA) die disperse Phase. Es versteht sich von selbst, dass es auch möglich ist, dass ein Teil der weiteren Additive (wA) gelöst in der Polyamidlösung (PL) vorliegt und ein weiterer Teil der weiteren Additive (wA) suspendiert in der Polyamidlösung (PL) vorliegt.

Anschließend kann die Polyamidzusammensetzung (PZ) aus der Polyamidlösung (PL), die das mindestens eine Additiv (A) sowie gegebenenfalls weitere Additive (wA) enthält, gefällt werden.

Die Fällung kann nach allen dem Fachmann bekannten Methoden erfolgen. So kann die Polyamidzusammensetzung (PZ) beispielsweise gefällt werden, indem die Polyamidlösung (PL), die das mindestens eine Additiv (A) sowie gegebenenfalls die weiteren Additive (wA) enthält, abgekühlt wird, das Lösungsmittel (LM) aus der Polyamidlösung (PL), die das mindestens eine Additiv (A) sowie gegebenenfalls sie weiteren Additive (wA) enthält, abdestilliert wird oder ein Fällungsmittel (FM) zu der Polyamidlösung (PL), die das mindestens eine Additiv (A) sowie gegebenenfalls die weiteren Additive (wA) enthält, gegeben wird. Bevorzugt wird die Polyamidzusammensetzung (PZ) gefällt, indem die Polyamidlösung (PL), die das mindestens eine Additiv (A) enthält, abgekühlt wird.

Als Lösungsmittel (LM) kann genau ein Lösungsmittel verwendet werden. Ebenso ist es möglich, zwei oder mehrere Lösungsmittel als Lösungsmittel (LM) zu verwenden. Geeignete Lösungsmittel (LM) sind beispielsweise ausgewählt aus der Gruppe bestehend aus Alkoholen, Lactamen und Ketonen. Bevorzugt ist das Lösungsmittel (LM) ausgewählt aus der Gruppe bestehend aus Alkoholen und Lactamen.

Unter Lactam werden erfindungsgemäß im Allgemeinen zyklische Amide verstanden, die im Ring 3 bis 12 Kohlenstoffatome, bevorzugt 4 bis 6 Kohlenstoffatome aufweisen. Geeignete Lactame sind beispielsweise ausgewählt aus der Gruppe bestehend aus Propio-3-lactam (β-Lactam; β-Propiolactam), Butyro-4-lactam (γ-Lactam; γ-Butyrolactam), 2-Piperidinon, (δ-Lactam; δ-Valerolactam), Hexano-6-lactam (ε-Lactam; ε-Caprolactam), Heptano-7-lactam (ζ-Lactam; ζ-Heptanolactam), Oktano-8-lactam (η-Lactam; η-Oktanolactam), Nonano-9-lactam (θ-Lactam; θ-Nonanolactam), Dekano-10-lactam (ω-Dekanolactam), Undekano-11-lactam (ω-Undekanolactam) und Dodekano-12-lactam (ω-Dodekanolactam).

Die Lactame können unsubstituiert oder zumindest monosubstituiert sein. Für den Fall, dass zumindest monosubstituierte Lactame eingesetzt werden, können diese am Stickstoffatom und/oder an den Kohlenstoffatomen des Rings einen, zwei oder mehrere Substituenten tragen, die unabhängig voneinander ausgewählt sind aus der Gruppe bestehend aus $C_1$- bis $C_{10}$-Alkyl, $C_5$- bis $C_6$-Cycloalkyl und $C_5$- bis $C_{10}$-Aryl.

Als $C_1$- bis $C_{10}$-Alkylsubstituenten sind beispielsweise Methyl, Ethyl, Propyl, Isopropyl, n-Butyl, sec.-Butyl und tert.-Butyl geeignet. Ein geeigneter $C_5$- bis $C_6$-Cycloalkylsubstituent ist beispielsweise Cyclohexyl. Bevorzugte $C_5$- bis $C_{10}$-Arylsubstituenten sind Phenyl und Anthranyl.

Bevorzugt werden unsubstituierte Lactame eingesetzt, wobei γ-Lactam (γ-Butyrolactam), δ-Lactam (δ-Valerolactam) und ε-Lactam (ε-Caprolactam) bevorzugt sind. Besonders bevorzugt sind δ-Lactam (δ-Valerolactam) und ε-Lactam (ε-Caprolactam), wobei ε-Caprolactam insbesondere bevorzugt ist.

Bevorzugt enthält das Lösungsmittel (LM) mindestens 20 Gew.-% Lactam, besonders bevorzugt mindestens 25 Gew.-% Lactam, insbesondere bevorzugt mindestens 30 Gew.-% Lactam und am meisten bevorzugt mindestens 40 Gew.-% Lactam, jeweils bezogen auf das Gesamtgewicht des Lösungsmittels (LM).

Weiterhin am meisten bevorzugt besteht das Lösungsmittel (LM) aus Lactam.

Es ist außerdem bevorzugt, dass das Lösungsmittel (LM) weniger als 80 Gew.-% Wasser enthält, besonders bevorzugt weniger als 75 Gew.-% Wasser, insbesondere bevorzugt weniger als 70 Gew.-% Wasser und am meisten bevorzugt weniger als 60 Gew.-% Wasser, jeweils bezogen auf das Gesamtgewicht des Lösungsmittels (LM).

Die Untergrenze des Wassergehalts des Lösungsmittels (LM) liegt im Allgemeinen im Bereich von 0 bis 0,5 Gew.-%, bevorzugt im Bereich von 0 bis 0,3 Gew.-%, besonders bevorzugt im Bereich von 0 bis 0,1 Gew.-%, jeweils bezogen auf das Gesamtgewicht des Lösungsmittels (LM).

Das mindestens eine Polyamid (P) kann bei beliebiger Temperatur in dem Lösungsmittel (LM) gelöst werden. Bevorzugt wird das mindestens eine Polyamid (P) unter Erwärmen in dem Lösungsmittel (LM) gelöst. Beispielsweise liegt die Temperatur beim Lösen im Bereich von 80 bis 200 °C, bevorzugt im Bereich von 90 bis 190 °C und insbesondere bevorzugt im Bereich von 120 bis 180 °C.

Erfolgt die Fällung der Polyamidzusammensetzung (PZ) aus der Polyamidlösung (PL), die das mindestens eine Additiv (A) sowie gegebenenfalls die weiteren Additive (wA) enthält, durch Abkühlung, so kann die Polyamidlösung (PL), die das mindestens eine Additiv (A) sowie gegebenenfalls weitere Additive (wA) enthält, nach allen dem Fachmann bekannten Methoden abgekühlt werden. Die Polyamidlösung (PL), die das mindestens eine Additiv (A) sowie gegebenenfalls die weiteren Additive (wA) enthält, kann auf eine beliebige Temperatur abgekühlt werden. Bevorzugt wird die Polyamidlösung (PL), die das mindestens eine Additiv (A) sowie gegebenenfalls die weiteren Additive (wA) enthält, auf eine Temperatur im Bereich von 20 bis 80 °C, besonders bevorzugt im Bereich von 20 bis 75 °C, abgekühlt.

Es versteht sich von selbst, dass die Temperatur, auf die die Polyamidlösung (PL), die das mindestens eine Additiv (A) sowie gegebenenfalls die weiteren Additive (wA) enthält, abgekühlt wird, unter der Temperatur liegt, bei der das Polyamid (P) in dem Lösungsmittel (LM) gelöst wird.

Wird die Polyamidzusammensetzung (PZ) durch Abkühlung der Polyamidlösung (PL), die das mindestens eine Additiv (A) sowie gegebenenfalls die weiteren Additive (wA) enthält, gefällt, so kann die Polyamidlösung (PL) während des Abkühlens beispielsweise gerührt werden, um besonders feine Partikel der Polyamidzusammensetzung (PZ) herzustellen.

Die Polyamidzusammensetzung (PZ) enthält erfindungsgemäß das mindestens eine Polyamid (P) sowie das mindestens eine Additiv (A) und gegebenenfalls weitere Additive (wA). Die Polyamidzusammensetzung (PZ) kann das mindestens eine Polyamid (P) neben dem mindestens einen Additiv (A) sowie den gegebenenfalls weiteren Additiven (wA) enthalten. Ebenso ist es möglich, dass das mindestens eine Polyamid (P) mit dem mindestens einen Additiv (A) sowie gegebenenfalls den weiteren Additiven (wA) zumindest teilweise beschichtet ist.

Dann wird üblicherweise zunächst das Polyamid (P) in dem Lösungsmittel (LM) gelöst unter Erhalt einer Lösung. Das Lösen kann nach allen dem Fachmann bekannten Methoden erfolgen, beispielsweise wie vorstehend beschrieben, wobei allerdings bevorzugt das mindestens eine Additiv (A) nicht zugegeben wird. Anschließend wird das Polyamid (P) aus der Lösung gefällt und getrocknet unter Erhalt eines Pulvers des Polyamids (P). Zur Fällung eignen sich alle dem Fachmann bekannten Methoden, beispielsweise die zuvor für die Polyamidlösung (PL) beschriebenen.

Das erhaltene Pulver des Polyamids (P) wird dann mit einer Lösung des mindestens einen Additivs (A) in Kontakt gebracht und anschließend getrocknet unter Erhalt des Sinterpulvers (SP). Als Lösungsmittel in der Lösung des mindestens einen Additivs (A) eigenen sich alle dem Fachmann bekannten Lösungsmittel, die das mindestens eine Additiv (A) lösen und die vorzugsweise das Polyamid (P) schlecht oder überhaupt nicht lösen, wie beispielsweise Wasser und/oder Alkohole. Zum Inkontaktbringen des Pulvers des Polyamids (P) mit der Lösung des mindestens einen Additivs (A) eignen sich alle dem Fachmann bekannten Methoden. Das Inkontaktbringen erfolgt üblicherweise bei Temperaturen im Bereich von 10 bis 30°C.

*Verwendung der Polyamidzusammensetzung (PZ)*

Die erfindungsgemäße Polyamidzusammensetzung (PZ) kann zur Herstellung von Formkörpern eingesetzt werden.

Gegenstand der vorliegenden Erfindung ist somit auch die Verwendung der erfindungsgemäßen Polyamidzusammensetzung (PZ) zur Herstellung von Formkörpern.

Die Formkörper können nach allen dem Fachmann bekannten Verfahren hergestellt werden. Beispielsweise durch ein selektives Lasersinterverfahren, ein Spritzgussverfahren oder durch ein Extrusionsverfahren. Diese Verfahren sind dem Fachmann als solche bekannt.

Die erfindungsgemäße Polyamidzusammensetzung (PZ) kann in jedem dem Fachmann bekannten Extrusionsverfahren eingesetzt werden. Beispielsweise zur Herstellung von Halbzeugen, von Folien oder im Blasformen.

Gegenstand der vorliegenden Erfindung ist außerdem die Verwendung der erfindungsgemäßen Polyamidzusammensetzung (PZ) in einem selektiven Lasersinterverfahren.

Das Verfahren des selektiven Lasersinterns ist dem Fachmann an sich bekannt und beispielsweise in der US 6,136,948 und der WO 96/06881 beschrieben.

Beim Lasersintern wird eine erste Schicht eines sinterbaren Pulvers in einem Pulverbett angeordnet und mit einem Laserstrahl lokal und kurzzeitig belichtet. Dabei wird nur der Teil des sinterbaren Pulvers, der vom Laserstrahl belichtet worden ist, selektiv aufgeschmolzen (selektives Lasersintern). Das aufgeschmolzene sinterbare Pulver fließt ineinander und bildet so eine homogene Schmelze in dem belichteten Bereich. Im Anschluss kühlt der Bereich wieder ab und das sinterbare Pulver erstarrt wieder. Dann wird das Pulverbett um die Schichtdicke der ersten Schicht abgesenkt, eine zweite Schicht des sinterbaren Pulvers aufgebracht, mit dem Laser selektiv belichtet und aufgeschmolzen. Dadurch verbindet sich zum einen die obere zweite Schicht des sinterbaren Pulvers mit der unteren ersten Schicht, außerdem

verbinden sich die Partikel des sinterbaren Pulvers innerhalb der zweiten Schicht durch das Aufschmelzen miteinander. Indem das Absenken des Pulverbetts, das Aufbringen des sinterbaren Pulvers und das Aufschmelzen des sinterbaren Pulvers wiederholt werden, können dreidimensionale Formkörper hergestellt werden. Durch die selektive Belichtung bestimmter Stellen mit dem Laserstrahl ist es möglich, Formkörper herzustellen, die beispielsweise auch Hohlräume aufweisen. Ein zusätzliches Stützmaterial ist nicht notwendig, da das nicht geschmolzene sinterbare Pulver selbst als Stützmaterial fungiert.

Als sinterbares Pulver beim selektiven Lasersintern eignen sich alle dem Fachmann bekannten Pulver, die durch Belichtung mit einem Laser aufgeschmolzen werden können. Erfindungsgemäß wird als sinterbares Pulver beim selektiven Lasersintern die Polyamidzusammensetzung (PZ) eingesetzt.

Die Polyamidzusammensetzung (PZ) wird dann als Sinterpulver, welches auch als sinterbares Pulver bezeichnet werden kann, verwendet.

Gegenstand der vorliegenden Erfindung ist daher auch die Verwendung der erfindungsgemäßen Polyamidzusammensetzung (PZ) als Sinterpulver.

Geeignete Laser für das selektive Lasersintern sind dem Fachmann bekannt und beispielsweise Faserlaser, Nd:YAG-Laser (Neodym-dotierter Yttrium-Aluminium-Granat-Laser) und Kohlendioxidlaser.

Von besonderer Bedeutung bei dem selektiven Lasersinterverfahren ist der Schmelzbereich des sinterbaren Pulvers, das so genannte "Sinterfenster (W)". Ist das sinterbare Pulver die erfindungsgemäße Polyamidzusammensetzung (PZ), so wird im Rahmen der vorliegenden Erfindung das Sinterfenster (W) als "Sinterfenster ($W_{SP}$)" der Polyamidzusammensetzung (PZ) bezeichnet. Ist das sinterbare Pulver das in der Polyamidzusammensetzung (PZ) enthaltene mindestens eine Polyamid (P), so wird im Rahmen der vorliegenden Erfindung das Sinterfenster (W) als "Sinterfenster ($W_P$)" des mindestens einen Polyamids (P) bezeichnet.

Das Sinterfenster (W) eines sinterbaren Pulvers kann beispielsweise durch dynamische Differenzkalorimetrie (DDK; differential scanning calorimetry, DSC) bestimmt werden.

Bei der dynamischen Differenzkalorimetrie werden die Temperatur einer Probe, im vorliegenden Fall also eine Probe des sinterbaren Pulvers, und die Temperatur einer Referenz linear mit der Zeit geändert. Dazu werden der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge $Q_R$.

Geht die Probe eine endotherme Phasenumwandlung ein, muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest), muss eine größere Wärmemenge Q abgeführt werden, um die Probe auf der gleichen Temperatur wie die Referenz zu halten, da bei der Kristallisation bzw. dem Erstarren Wärme frei wird. In dem DSC-Diagramm des Kühllaufs (K) wird dann ein Peak, der sogenannte Kristallisationspeak, in entgegengesetzter Richtung zu dem Aufschmelzpeak beobachtet.

Ein solches DSC-Diagramm mit einem Heizlauf (H) und einem Kühllauf (K) ist exemplarisch in Figur 1 dargestellt. Anhand des DSC-Diagramms können die Onset-Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens

($T_M^{onset}$) und der Onset-Temperatur der Kristallisation ($T_C^{onset}$). Es gilt also:

$$W = T_M^{onset} - T_C^{onset} .$$

Im Rahmen der vorliegenden Erfindung haben die Begriffe "Sinterfenster (W)", "Größe des Sinterfensters (W)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Die Bestimmung des Sinterfensters ($W_{SP}$) der Polyamidzusammensetzung (PZ) und die Bestimmung des Sinterfensters ($W_P$) des mindestens einen Polyamids (P) erfolgt wie vorstehend beschrieben. Als Probe wird dann zur Bestimmung des Sinterfensters ($W_{SP}$) der Polyamidzusammensetzung (PZ) die Polyamidzusammensetzung (PZ) verwendet, zur Bestimmung des Sinterfensters ($W_P$) des mindestens einen Polyamids (P) wird das mindestens eine Polyamid (P) als Probe verwendet.

Beispiele

Es wurden folgende Komponenten eingesetzt:

Polyamid (P):

(P1) Polyamid 12 (PA 2200, EOS)
(P2) Polyamid 6 (Ultramid® B27; BASF SE)

Additiv (A)

(A1) Neutralrot (3-Amino-7 -dimethylamino-2-methylphenazin Hydrochlorid, Carl Roth, Fluka, Alfa Aesar)

Herstellung des Sinterpulvers

Tabelle 1 gibt an, ob das Sinterpulver durch Fällung oder durch Vermahlung hergestellt worden ist.

Bei den durch Vermahlung hergestellten Sinterpulvern wurden die in Tabelle 1 angegebenen Komponenten in dem in Tabelle 1 angegebenen Verhältnis in einem Zweischnecken-Extruder (ZSK 40) bei einer Drehzahl von 200 U/min, einer Zylindertemperatur von 240 °C und einem Durchsatz 50 kg/h compoundiert mit einer anschließenden Stranggranulierung. Das so erhaltene Granulat wurde kryogen vermahlen unter Erhalt des Sinterpulvers (SP).

Zur Herstellung des Sinterpulvers durch Fällung wurde das Polyamid (P) in den in Tabelle 1 angegebenen Mengen bei einer Temperaturrampe von 2 Stunden bei 120°C, 2 Stunden bei 160°C und 0,5 Stunden bei 175°C in einem Lösungsmittel bestehend aus 40 Gew.-% Caprolactam und 60 Gew.-% Wasser, jeweils bezogen auf das Gesamtgewicht des Lösungsmittels, gelöst und anschließend durch Abkühlung gefällt. Anschließend wurde das so erhaltene Pulver des Polyamids (P) mit einer Lösung des Additivs (A) in Kontakt gebracht, wobei das Polyamid (P) und das Additiv (A) in dem in Tabelle 1 angegebenen Verhältnis eingesetzt wurden. Als Lösungsmittel in der Lösung des Additivs (A) wurde Wasser eingesetzt. Nach dem Trocknen wurde das Sinterpulver (SP) erhalten.

Tabelle 1

| Beispiel | (P1) [Gew.- %] | (P2) [Gew.- %] | (A1) [Gew.- %] | Herstellung |
|---|---|---|---|---|
| V1 | 100 | - | - | - |
| V2 | - | 100 | - | Vermahlung |
| V3 | | 100 | | Fällung |
| B4 | - | 99,875 | 0,125 | Fällung |
| B5 | | 99,5 | 0,5 | Fällung |

Es wurden die Onset-Temperatur des Aufschmelzens ($T_M^{onset}$) und die Onset-Temperatur der Kristallisation ($T_C^{onset}$) des Sinterpulvers bestimmt, wie für Figur 1 beschrieben. Daraus wurde das Sinterfenster (W) bestimmt.

Außerdem wurden Zugstäbe hergestellt, um den Verzug zu bestimmen.

Herstellung von Zugstäben

Die Sinterpulver wurden mit einer Schichtdicke von 0,1 mm in den Bauraum mit der in Tabelle 2 angegebenen Temperatur eingebracht. Anschließend wurde das Sinterpulver mit einem Laser, mit der in Tabelle 2 angegebenen Laserleistung und dem angegebenen Punktabstand belichtet, wobei die Geschwindigkeit des Lasers über der Probe beim Belichten bei dem in Tabelle 2 angegebenen Wert lag. Der Punktabstand wird auch als Laserbahnabstand oder als Spurabstand bezeichnet. Beim selektiven Lasersintern erfolgt das Scannen üblicherweise in Streifen. Der Punktabstand gibt den Abstand zwischen den Mitten der Streifen, also zwischen den beiden Zentren des Laserstrahls zweier Streifen, an.

Tabelle 2

| Beispiel | Temperatur [°C] | Laserleistung [W] | Lasergeschwindigkeit [m/s] | Punktabstand [mm] |
|---|---|---|---|---|
| V1 | 171 | 11 | 5 | 0,15 |
| V2 | 209 | 18 | 5 | 0,2 |
| V3 | 201 | 23 | 5 | 0,2 |
| B4 | 201 | 18 | 5 | 0,15 |
| B5 | 208 | 15 | 5 | 0,15 |

Bestimmung des Verzugs

Zur Bestimmung des Verzugs der erhaltenen Sinterstäbe, wurde der Sinterstab mit der konkaven Seite auf eine planare Fläche gelegt. Anschließend wurde der Abstand ($a_m$) zwischen der planaren Fläche und dem oberen Rand der Mitte des Sinterstabes bestimmt. Zudem wurde die Dicke ($d_m$) in der Mitte des Sinterstabs bestimmt. Der Verzug in % bestimmt sich dann gemäß folgender Formel:

$$V=100 \cdot (a_m-d_m) / d_m$$

Die Dimension der Sinterstäbe lag üblicherweise bei 80 mm Länge, 10 mm Breite und 4 mm Dicke.

In Tabelle 3 sind die Ergebnisse der Messung des Sinterfensters (W) und des Verzugs angegeben.

Tabelle 3

| Beispiel | $T_m^{onset}$ [°C] | $T_c^{onset}$ [°C] | Sinterfenster W [K] | Verzug [%] |
|---|---|---|---|---|
| V1 | 178,7 | 152,5 | 26,2 | - |
| V2 | 207,4 | 190,7 | 16,7 | 50 |
| V3 | 214,1 | 188,8 | 25,3 | 20 |
| B4 | 213,2 | 181,3 | 31,9 | - |
| B5 | 211,5 | 175,6 | 35,9 | 5 |

Anhand von Tabelle 3 ist deutlich zu erkennen, dass durch die Verwendung von mindestens einem Additiv (A) in dem Sinterpulver (SP) ein deutlich verbreitertes Sinterfenster erhalten wird. Zudem wird der Verzug deutlich reduziert.

**Patentansprüche**

1. Verwendung einer Polyamidzusammensetzung (PZ), die mindestens ein Polyamid (P) und mindestens ein Additiv (A) enthält, wobei das mindestens eine Additiv (A) ausgewählt ist aus Verbindungen der allgemeinen Formel (I)

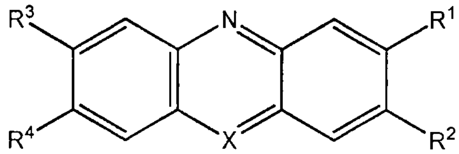

(I)

in der

$R^1$ und $R^3$ unabhängig voneinander ausgewählt sind aus der Gruppe bestehend aus H, $C_1$- bis $C_{10}$-Alkyl und $NR^5R^6$, wobei

$R^5$ und $R^6$ unabhängig voneinander ausgewählt sind aus der Gruppe bestehend aus H und $C_1$- bis $C_{10}$-Alkyl;

$R^2$ und $R^4$ unabhängig voneinander ausgewählt sind aus der Gruppe bestehend aus H, $C_1$- bis $C_{10}$-Alkyl und $NR^7R^8$, wobei

$R^7$ und $R^8$ unabhängig voneinander ausgewählt sind aus der Gruppe bestehend aus H und $C_1$- bis $C_{10}$-Alkyl;

X N, $O^+$ oder $S^+$ bedeutet;

wobei die Verbindungen der allgemeinen Formel (I) eine positive Ladung aufweisen, wenn X $O^+$ oder $S^+$ bedeutet und die Verbindungen der allgemeinen Formel (I) dann ein Anion $Y^-$ enthalten,
wobei

$Y^-$ ausgewählt ist aus der Gruppe bestehend aus Hydroxid, Chlorid, Bromid, Iodid, Sulfat, Sulfit, Phosphat und Phosphit, und wobei die Polyamidzusammensetzung (PZ) als Pulver mit einer Partikelgröße im Bereich von 1 bis 200 $\mu$m vorliegt, gemessen mittels Laserbeugung,

als Sinterpulver.

2. Verwendung gemäß Anspruch 1, **dadurch gekennzeichnet, dass** die Polyamidzusammensetzung (PZ) im Bereich von 95 bis 99,9 Gew.-% des mindestens einen Polyamids (P) und im Bereich von 0,1 bis 5 Gew.-% des mindestens einen Additivs (A) enthält, jeweils bezogen auf die Summe der Gewichtsprozente des mindestens einen Polyamids (P) und des mindestens einen Additivs (A).

3. Verwendung gemäß Anspruch 1 oder 2, **dadurch gekennzeichnet, dass** das in der Polyamidzusammensetzung (PZ) enthaltene mindestens eine Polyamid (P) ausgewählt ist aus der Gruppe bestehend aus PA 4, PA 6, PA 7, PA 8, PA 9, PA 11, PA 12, PA 46, PA 66, PA 69, PA510, PA 610, PA 612, PA 613, PA 1212, PA 1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T und Copolyamiden aus zwei oder mehreren der vorstehend genannten Polyamide.

4. Verwendung gemäß einem der Ansprüche 1 bis 3, **dadurch gekennzeichnet, dass** das in der Polyamidzusammensetzung (PZ) enthaltene mindestens eine Polyamid (P) ausgewählt ist aus der Gruppe, bestehend aus Polyamid 6 (PA 6), Polyamid 66 (PA 66), Polyamid 6/66 (PA 6/66), Polyamid 66/6 (PA 66/6), Polyamid 610 (PA 610), Polyamid 6/6T (PA 6/6T), Polyamid 12 (PA 12) und Polyamid 1212 (PA 1212).

5. Verwendung gemäß einem der Ansprüche 1 bis 4, **dadurch gekennzeichnet, dass** die Substituenten der Verbindungen der allgemeinen Formel (I) die folgende Bedeutung haben:

$R^1$ und $R^3$ sind unabhängig voneinander ausgewählt aus der Gruppe bestehend aus H und $C_1$- bis $C_5$-Alkyl;
$R^2$ und $R^4$ sind unabhängig voneinander ausgewählt aus der Gruppe bestehend aus $C_1$- bis $C_5$-Alkyl und $NR^7R^8$, wobei

$R^7$ und $R^8$ unabhängig voneinander ausgewählt sind aus der Gruppe bestehend aus H und $C_1$- bis $C_5$-Alkyl;

X ist N oder $S^+$,

wobei die Verbindungen der allgemeinen Formel (I) eine positive Ladung aufweisen, wenn X $S^+$ bedeutet und die Verbindungen der allgemeinen Formel (I) dann ein Anion $Y^-$ enthalten,
wobei

$Y^-$ ausgewählt ist aus der Gruppe bestehend aus Hydroxid, Chlorid, Bromid und Iodid.

6. Verwendung gemäß einem der Ansprüche 1 bis 5, **dadurch gekennzeichnet, dass** das in der Polyamidzusammensetzung (PZ) enthaltene mindestens ein Additiv (A) ausgewählt ist aus der Gruppe bestehend aus Neutralrot und Methylenblau.

7. Verwendung gemäß einem der Ansprüche 1 bis 6, **dadurch gekennzeichnet, dass** die Polyamidzusammensetzung (PZ) weitere Additive (wA) enthält, wobei die weiteren Additive (wA) ausgewählt sind aus der Gruppe bestehend aus Stabilisatoren, Farbstoffen, Pigmenten, Füllstoffen, Verstärkungsstoffen, Schlagzähmodifizierern und Weichmachern.

8. Verwendung gemäß einem der Ansprüche 1 bis 7, **dadurch gekennzeichnet, dass** die Polyamidzusammensetzung (PZ) im Bereich von 0,1 bis 60 Gew.-% weiterer Additive (wA) enthält, bezogen auf das Gesamtgewicht der Polyamidzusammensetzung (PZ).

9. Verwendung einer Polyamidzusammensetzung (PZ) gemäß einem der Ansprüche 1 bis 8 in einem selektiven Lasersinterverfahren.

10. Verwendung einer Polyamidzusammensetzung (PZ) gemäß einem der Ansprüche 1 bis 9 zur Herstellung von Formkörpern.

**Claims**

1. The use of a polyamide composition (PC) which comprises at least one polyamide (P) and at least one additive (A), wherein the at least one additive (A) is selected from compounds of general formula (I)

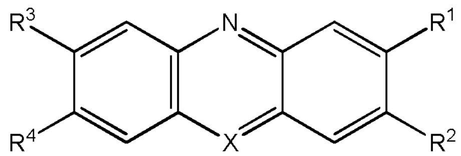

(I)

in which

$R^1$ and $R^3$ are independently of one another selected from the group consisting of H, $C_1$- to $C_{10}$-alkyl and $NR^5R^6$, wherein

$R^5$ and $R^6$ are independently of one another selected from the group consisting of H and $C_1$- to $C_{10}$-alkyl;

$R^2$ and $R^4$ are independently of one another selected from the group consisting of H, $C_1$- to $C_{10}$-alkyl and $NR^7R^8$, wherein

$R^7$ and $R^8$ are independently of one another selected from the group consisting of H and $C_1$- to $C_{10}$-alkyl;

X represents N, $O^+$ or $S^+$;

wherein the compounds of general formula (I) have a positive charge when X represents $O^+$ or $S^+$ and the compounds of general formula (I) then comprise an anion $Y^-$,
wherein

$Y^-$ is selected from the group consisting of hydroxide, chloride, bromide, iodide, sulfate, sulfite, phosphate and phosphite and wherein the polyamide composition (PC) is present in the form of a powder having a particle size in the range from 1 to 200 µm, measured by laser diffraction,

as sintering powder.

2. The use according to claim 1, wherein the polyamide composition (PC) comprises in the range from 95 to 99.9 wt% of the at least one polyamide (P) and in the range from 0.1 to 5 wt% of the at least one additive (A) in each case based on the sum of the weight percentages of the at least one polyamide (P) and of the at least one additive (A).

3. The use according to claim 1 or 2, wherein the at least one polyamide (P) present in the polyamide composition (PC) is selected from the group consisting of PA 4, PA 6, PA 7, PA 8, PA 9, PA 11, PA 12, PA 46, PA 66, PA 69, PA 510, PA 610, PA 612, PA 613, PA 1212, PA1313, PA 6T, PA MXD6, PA 61, PA 6-3-T, PA 6/6T, PA 6/66, PA 66/6, PA 6/12, PA 66/6/610, PA 61/6T, PA PACM 12, PA 61/6T/PACM, PA 12/MACMI, PA 12/MACMT, PA PDA-T and copolyamides composed of two or more of the abovementioned polyamides.

4. The use according to any of claims 1 to 3, wherein the at least one polyamide (P) present in the polyamide composition (PC) is selected from the group consisting of polyamide 6 (PA 6), polyamide 66 (PA 66), polyamide 6/66 (PA 6/66), polyamide 66/6 (PA 66/6), polyamide 610 (PA 610), polyamide 6/6T (PA 6/6T), polyamide 12 (PA12) and polyamide 1212 (PA1212) .

5. The use according to any of claims 1 to 4, wherein the substituents of the compounds of general formula (I) are defined as follows:

$R^1$ and $R^3$ are independently of one another selected from the group consisting of H and $C_1$- to $C_5$-alkyl;
$R^2$ and $R^4$ are independently of one another selected from the group consisting of $C_1$- to $C_5$-alkyl and $NR^7R^8$, wherein

$R^7$ and $R^8$ are independently of one another selected from the group consisting of H and $C_1$- to $C_5$-alkyl;

X is N or $S^+$,

wherein the compounds of general formula (I) have a positive charge when X represents $S^+$ and the compounds of general formula (I) then comprise an anion $Y^-$,
wherein

$Y^-$ is selected from the group consisting of hydroxide, chloride, bromide and iodide.

6. The use according to any of claims 1 to 5, wherein the at least one additive (A) present in the polyamide composition (PC) is selected from the group consisting of neutral red and methylene blue.

7. The use according to any of claims 1 to 6, wherein the polyamide composition (PC) comprises further additives (fA), wherein the further additives (fA) are selected from the group consisting of stabilizers, dyes, pigments, fillers, reinforcers, impact modifiers and plasticizers.

8. The use according to any of claims 1 to 7, wherein the polyamide composition (PC) comprises in the range from 0.1 to 60 wt% of further additives (fA) based on the total weight of the polyamide composition (PC).

9. The use of a polyamide composition (PC) according to any of claims 1 to 8 in a selective laser sintering process.

10. The use of a polyamide composition (PC) according to any of claims 1 to 9 for producing molded articles.

## Revendications

1. Utilisation d’une composition de polyamide (PZ) qui contient au moins un polyamide (P) et au moins un additif (A), l’au moins un additif (A) étant choisi parmi des composés de la formule générale (I)

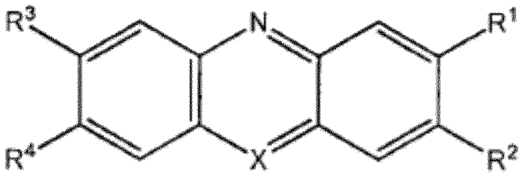

(I)

dans laquelle

$R^1$ et $R^3$ sont choisis indépendamment l'un de l'autre dans le groupe constitué par H, alkyle en $C_1$ à $C_{10}$ et $NR^5R^6$, $R^5$ et $R^6$ étant choisis indépendamment l'un de l'autre dans le groupe constitué par H et alkyle en $C_1$ à $C_{10}$ ;
$R^2$ et $R^4$ sont choisis indépendamment l'un de l'autre dans le groupe constitué par H, alkyle en $C_1$ à $C_{10}$ et $NR^7R^8$, $R^7$ et $R^8$ étant choisis indépendamment l'un de l'autre dans le groupe constitué par H et alkyle en $C_1$ à $C_{10}$ ;
X signifie N, $O^+$ ou $S^+$,
les composés de la formule générale (I) présentant une charge positive lorsque X signifie $O^+$ ou $S^+$ et les composés de la formule générale (I) contenant alors un anion $Y^-$,
$Y^-$ étant choisi dans le groupe constitué par hydroxyde, chlorure, bromure, iodure, sulfate, sulfite, phosphate et phosphite et la composition de polyamide (PZ) étant présente en tant que poudre dotée d'une taille de particule dans la plage de 1 à 200 μm, mesurée au moyen d'une diffraction laser,
en tant que poudre pour frittage.

2. Utilisation selon la revendication 1, **caractérisée en ce que** la composition de polyamide (PZ) contient dans la plage de 95 à 99,9 % en poids de l'au moins un polyamide (P) et dans la plage de 0,1 à 5 % en poids de l'au moins un additif (A), à chaque fois par rapport à la somme des pourcentages en poids de l'au moins un polyamide (P) et de l'au moins un additif (A).

3. Utilisation selon la revendication 1 ou 2, **caractérisée en ce que** l'au moins un polyamide (P) contenu dans la composition de polyamide (PZ) est choisi dans le groupe constitué par PA 4, PA 6, PA 7, PA 8, PA 9, PA 11, PA 12, PA 46, PA 66, PA 69, PA 510, PA 610, PA 612, PA 613, PA 1212, PA 1313, PA 6T, PA MXD6, PA 61, PA 6-3-T, PA 6/6T, PA 6/66, PA 66/6, PA6/12, PA 66/6/610, PA 6I/6T, PA PACM 12, PA 6I/6T/PACM, PA 12/MACMI, PA 12/MACMT, PA PDA-T et des copolymères de deux ou plus des polyamides mentionnés précédemment.

4. Utilisation selon l'une quelconque des revendications 1 à 3, **caractérisée en ce que** l'au moins un polyamide (P) contenu dans la composition de polyamide (PZ) est choisi dans le groupe constitué par polyamide 6 (PA 6), polyamide 66 (PA 66), polyamide 6/66 (PA 6/66), polyamide 66/6 (PA 66/6), polyamide 610 (PA 610), polyamide 6/6T (PA 6/6T), polyamide 12 (PA 12) et polyamide 1212 (PA 1212).

5. Utilisation selon l'une quelconque des revendications 1 à 4, **caractérisée en ce que** les substituants des composés de la formule générale (I) possèdent la signification suivante :

$R^1$ et $R^3$ sont choisis indépendamment l'un de l'autre dans le groupe constitué par H et alkyle en $C_1$ à $C_5$,
$R^2$ et $R^4$ sont choisis indépendamment l'un de l'autre dans le groupe constitué par alkyle en $C_1$ à $C_5$ et $NR^7R^8$, $R^7$ et $R^8$ étant choisis indépendamment l'un de l'autre dans le groupe constitué par H et alkyle en $C_1$ à $C_5$ ;
X signifie N ou $S^+$,
les composés de la formule générale (I) présentant une charge positive lorsque X signifie $S^+$ et les composés de la formule générale (I) contenant alors un anion $Y^-$,
$Y^-$ étant choisi dans le groupe constitué par hydroxyde, chlorure, bromure et iodure.

6. Utilisation selon l'une quelconque des revendications 1 à 5, **caractérisée en ce que** l'au moins un additif (A) contenu dans la composition de polyamide (PZ) est choisi dans le groupe constitué par le rouge neutre et le bleu de méthylène.

7. Utilisation selon l'une quelconque des revendications 1 à 6, **caractérisée en ce que** la composition de polyamide (PZ) contient d'autres additifs (wA), les autres additifs (wA) étant choisis dans le groupe constitué par des stabilisants, des colorants, des pigments, des charges, des matières de renforcement, des modificateurs de résistance aux chocs et des plastifiants.

8. Utilisation selon l'une quelconque des revendications 1 à 7, **caractérisée en ce que** la composition de polyamide (PZ) contient dans la plage de 0,1 à 60 % en poids d'autres additifs (wA), par rapport au poids total de la composition

de polyamide (PZ).

**9.** Utilisation d'une composition de polyamide (PZ) selon l'une quelconque des revendications 1 à 8 dans un procédé de frittage laser sélectif.

**10.** Utilisation d'une composition de polyamide (PZ) selon l'une quelconque des revendications 1 à 9 dans la fabrication de corps moulés.

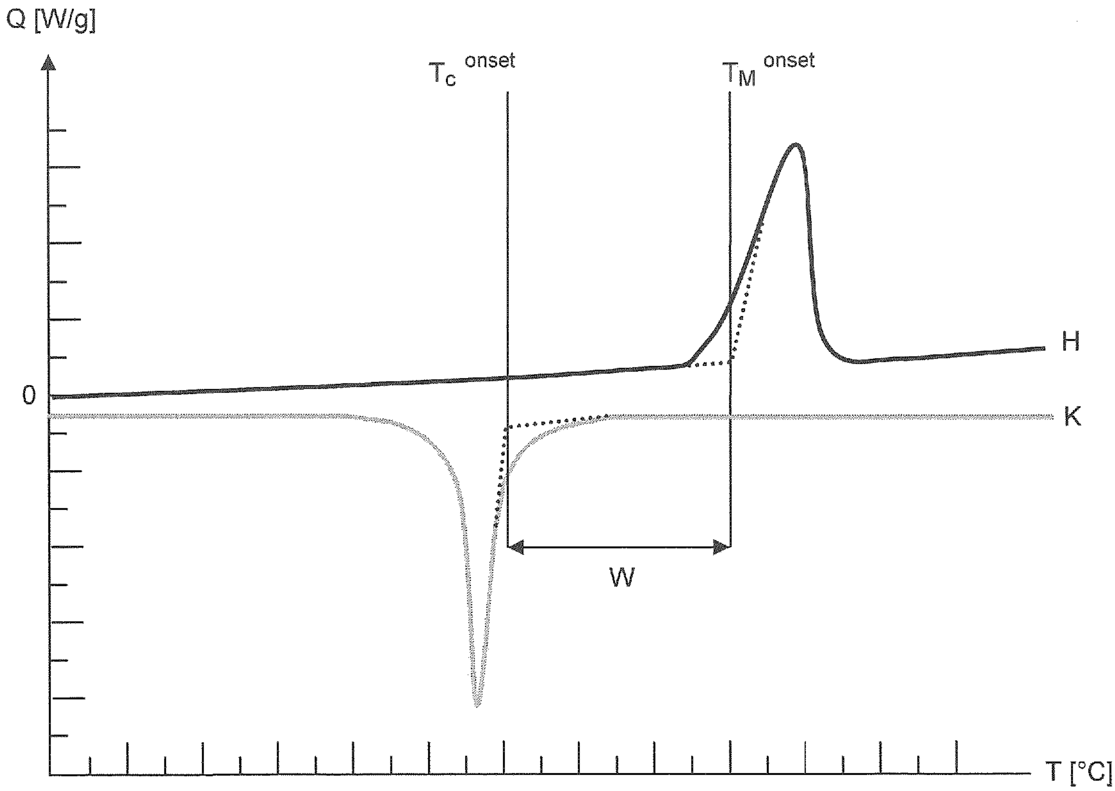


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20060108567 A1
- DE 2458347 A1
- US 6136948 A
- WO 9606881 A


### In der Beschreibung aufgeführte Nicht-Patentliteratur


- *CHEMICAL ABSTRACTS,* 61-73-4
- *CHEMICAL ABSTRACTS,* 553-24-2